# EUROPEAN PATENT SPECIFICATION

(11) **EP 0 889 203 B1**
(45) Date of publication and mention of the grant of the patent: **03.09.2003**
(21) Application number: 98111984.5
(22) Date of filing: 29.06.1998
(51) Int. Cl.: F01K 23/10, F02C 7/16

(54) **Combined cycle power generation plant**
Kraftwerk mit kombiniertem Kreislauf
Centrale à cycle combiné

(30) Priority: 04.07.1997 JP 17967397
(43) Date of publication of application: 07.01.1999
(73) Proprietor: Mitsubishi Heavy Industries, Ltd., Tokyo 100-0005 (JP)
(72) Inventor: Kataoka, Masahito, c/o Takasago Machinery Works, Takasago-shi, Hyogo-ken (JP); Ichiryu, Taku, c/o Takasago Machinery Works, Takasago-shi, Hyogo-ken (JP); Fukuizumi, Yasushi, c/o Takasago Machinery Works, Takasago-shi, Hyogo-ken (JP)
(74) Representative: Henkel, Feiler, Hänzel

(56) References cited:
- EP-A- 0 062 932
- EP-A- 0 764 767
- US-A- 4 571 935
- US-A- 5 412 937
- PATENT ABSTRACTS OF JAPAN vol. 097, no. 002, 28 February 1997 & JP 08 270408 A (HITACHI LTD), 15 October 1996

## Description

### BACKGROUND OF THE INVENTION:

### Field of the Invention:

The present invention relates to a combined cycle power generation plant constructed by combining a gas turbine plant and a steam turbine plant.

### Description of the Prior Art:

A combined cycle power generation plant is a power generation system constructed by combining a gas turbine plant and a steam turbine plant and a high temperature range of thermal energy is taken charge of by a gas turbine and a low temperature range of same by a steam turbine, thus the thermal energy is recovered and made use of effectively and this power generation system is now going to be used widely.

In said combined cycle power generation plant, research and development thereof has been done with emphasis being put on how far the high temperature range of gas turbine can be heightened as one point for enhancing the efficiency.

On the other hand, there must be provided a cooling system for securing heat resistance of gas turbine structure for forming the high temperature range and air has been used as cooling medium in this cooling system.

However, so far as air is used as cooling medium, even if the high temperature range is attained, there are problems which prevent thermal efficiency from being enhanced further, said problems being such that there is caused a power loss at own air compressor for elevating pressure of air which has been used for cooling to a necessary level and there occurs a lowering of mean gas temperature of a high temperature gas flowing in high temperature gas passages in the turbine when the high temperature gas is mixed with the air which has been used for cooling of the turbine, which results in lowering of energy contained therein.

In order to dissolve said problems and to enhance efficiency further, cooling system using steam in place of air as the cooling medium has been disclosed.

One example thereof is an invention of the Japanese laid-open patent No. Hei 05(1993)-163960, which discloses an idea to employ steam as the cooling medium'of gas turbine but there remained various problems therein which have to be devised and solved in detail.

For example, said invention discloses substantially only a basic idea that a cooling steam is supplied into a high temperature portion to be cooled of gas turbine from a certain steam source to flow through portions to be cooled and then to be led into a recovery portion after it has done a predetermined work and there is mentioned therein nothing of particular consideration on problems of pressure loss of the cooling steam and the like in that process of work.

That is, as to the art of steam cooling, it is still a stage of try and error wherein no satisfactory prior art is seen yet as to detailed pursuit, device, consideration, countermeasure, etc. of the problems as mentioned above.

The prior art remains still in a basic idea, as mentioned above, wherein cooling steam passages are formed in series so as to communicate one to another along an entire portion to be cooled in a stationary system and a rotating system, respectively.

That is, the high temperature portion to be cooled in the stationary system is constructed such that the cooling steam flows in series through a first stage stationary blade and then a second stage stationary blade communicating thereto to be heated through a predetermined cooling and then to flow to a recovery portion.

In such a construction, there is caused a large pressure loss at the high temperature portion to be cooled of the gas turbine so that there occur various restrictions on the upstream side and the downstream side of the high temperature portion to be cooled which make freedom smaller not only of designing and manufacturing but also of operation and bring on lowering of plant efficiency. That is, if pressure of the cooling steam is lowered when it is to be recovered after cooling of the high temperature portion to be cooled, output of steam turbine is reduced by that degree of pressure lowering, which brings on lowering of plant efficiency.

On the other hand, if a predetermined pressure is to be obtained continuously at the steam turbine with said pressure loss being considered in advance, it requires a control valve of which capacity is larger than needed. This not only means increase of cost in designing and manufacturing but also employment of control valve of such a large capacity will be impractical.

A prior art combined cycle power generation plant in which the blades of plural consecutive stages of the gas turbine are cooled in parallel is disclosed in US-A-4 571 935. The steam cooling cycle comprises a cooling steam passage from which steam cooling passages for conveying the steam through the individual blades are branched off and a recovery system to recover the steam after said individual blades of the plural stages have been cooled thereby, and then to feed the recovered steam to a steam turbine.

Another prior art combined cycle power generation plant with parallel arrangement of cooling passages and steam recovery passages for the blades of consecutive stages of a steam turbine is disclosed in JP 08 270408 A.

### SUMMARY OF THE INVENTION

In view of the mentioned problems in the prior art it is an object of the present invention to provide a combined cycle power generation plant in which pressure loss is prevented from becoming larger at a high temperature portion to be cooled of the gas turbine and a cooling steam is recovered efficiently.

In order to attain this object the present invention provides a combined cycle power generation plant as defined in claim 1.

Accordingly, the present invention provides a combined cycle power generation plant as first mentioned above, wherein said parallel cooling steam passages consist of a plurality of mutually independent and parallel cooling steam passage systems, each system comprising a plurality of stationary blades or moving blades sectioned with respect to same one stage. Thus, a plurality of mutually independent and parallel cooling steam passage systems, each system comprising a plurality of stationary blades or moving blades sectioned with respect to same one stage, are provided and the pressure loss at the cooling steam passages are dispersed, hence aggregate of all the pressure losses can be reduced.

### BRIEF DESCRIPTION OF THE DRAWINGS:

Fig. 1 is an axial cross sectional view showing very schematically a main part of gas turbine cooled portion serving to explain certain aspects of the present invention.
Fig. 2 is a radial cross sectional view showing very schematically a main part of gas turbine cooled portion of an embodiment according to the present invention.

### DESCRIPTION OF THE PREFERRED EMBODIMENT:

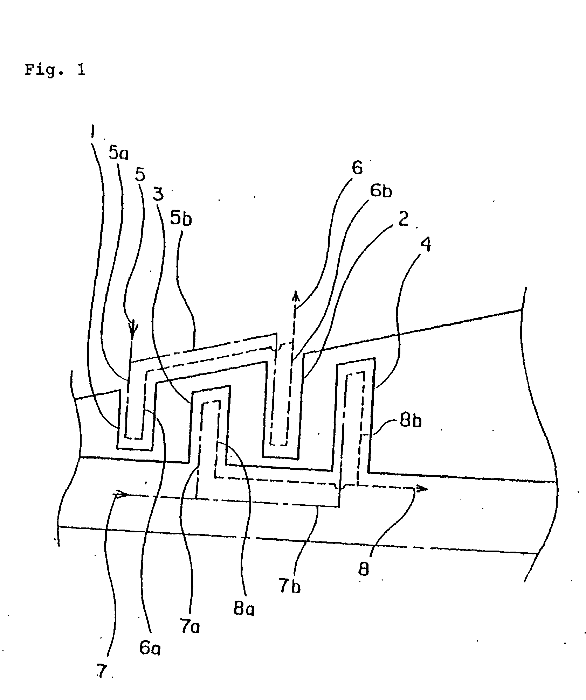

An example of a coding system of a gas turbine will be described with reference to Fig. 1 to explain certain aspects of the present invention. Fig. 1 is a view showing a main part of the gas turbine embodiment very schematically for simplicity of description.

Numeral 1 designates a first stage stationary blade, numeral 2 designates a second stage stationary blade, numeral 3 designate a first stage moving blade and numeral 4 designates a second stage moving blade. Numeral 5 designates a cooling steam supply channel, which branches midway to communicate to a cooling steam passage 5a of the first stage stationary blade 1 and a cooling steam passage 5b of the second stage stationary blade 2.

The cooling steam passage 5a communicates to a steam recovery passage 6a of the first stage stationary blade 1 via a portion to be cooled of the first stage stationary blade 1 and the cooling steam passage 5b communicates to a steam recovery passage 6b of the second stage stationary blade 2 via a portion to be cooled of the second stage stationary blade 2 and both the steam recovery passages 6a and 6b join together downstream thereof to communicate to a steam recovery passage 6.

That is, the cooling steam passage 5a at a position of the first stage stationary blade 1 and the cooling steam passage 5b at a position of the second stage stationary blade 2 form mutually independent and parallel passages and the steam recovery passages 6a and 6b communicating thereto form likewise mutually independent and parallel passages.

On the other hand, if seen on the moving blade side, symmetrically to the stationary blade side numeral 7 designates a cooling steam supply channel, which branches midway to communicate to a cooling steam passage 7a of the first stage. moving blade 3 and a cooling steam passage 7b of the second stage moving blade 4.

And the cooling steam passage 7a communicates to a steam recovery passage 8a of the first stage moving blade 3 via a portion to be cooled of the first stage moving blade 3 and the cooling steam passage 7b communicates to a steam recovery passage 8b of the second stage moving blade 4 via a portion to be cooled of the second stage moving blade 4 and both the steam recovery passages 8a and 8b join together downstream thereof to communicate to a steam recovery passage 8.

That is, like the stationary blade side, the cooling steam passage 7a at a position of the first stage moving blade 3 and the cooling steam passage 7b at a position of the second stage moving blade 4 form mutually independent and parallel passages and the steam recovery passages 8a and 8b communicating thereto form likewise mutually independent and parallel passages.

In this example constructed as mentioned above, if seen on the stationary blade side first, the cooling steam supplied from an outside cooling steam supply source which is not shown is fed from the cooling steam supply channel 5 to branch to the cooling steam passages 5a, 5b so as to be led into the first stage stationary blade 1 and the second stage stationary blade 2. Then, the cooling steam itself is heated through cooling the high temperature portions to be cooled of the first stage stationary blade 1 and the second stage stationary blade 2 and joins into the steam recovery passage 6 via the mutually independent and parallel recovery passages 6a, 6b to be heat-recovered at a steam turbine and the like which are not shown.

In this case, the cooling steam flowing in the cooling steam passage 5a has nothing to do with a pressure loss due to the cooling steam passage 5b and the cooling steam flowing in the cooling steam passage 5b has nothing to do with a pressure loss due to the cooling steam passage 5a, hence the pressure loss as a whole is reduced greatly.

On the other hand, if seen on the moving blade side, the situation is quite same as the stationary blade side and it will be easily understood without repeated explanation that the cooling steam flows with a reduced pressure loss and is heat-recovered at a steam turbine and the like which are not shown via the steam recovery passage 8.

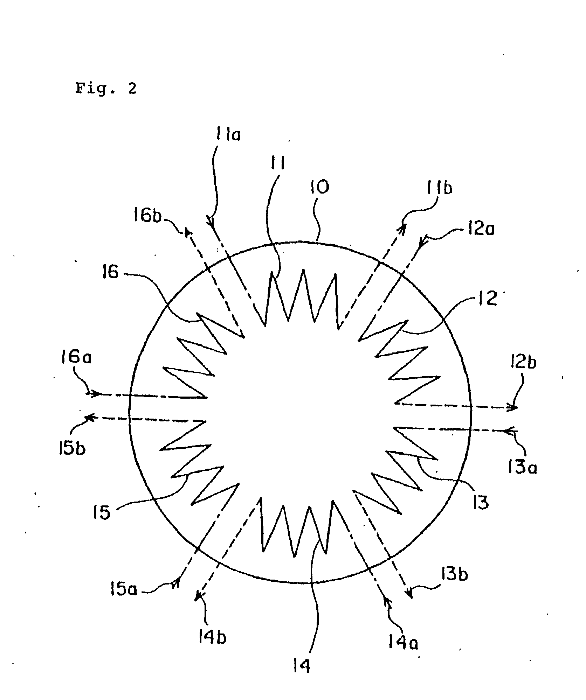

Next, an embodiment according to the present invention will be described with reference to Fig. 2. Fig. 2 is a view showing a main part of the embodiment very schematically also for simplicity of description.

Numeral 10 designates a blade set is same one stage, shown imaginably, comprising a multitude of stationary blades or moving blades along the entire circumference. The blade set 10 here is sectioned into six groups, each forming a group of independent cooling steam passage system, so that said groups of system are arranged mutually in parallel along the circumferential direction.

That is, a cooling steam passage 11 of a first blade group comprises a cooling steam supply channel 11a and a steam recovery passage 11b, and a cooling steam passage 12 of a second blade group comprises a cooling steam supply channel 12a and a steam recovery passage 12b, and likewise thereafter cooling steam passages 13, 14, 15 and 16 of 3rd, 4th, 5th and 6th blade groups comprise cooling steam supply channels 13a, 14a, 15a and 16a and steam recovery passages 13b, 14b, 15b and 16b, respectively, so that these six groups are arranged mutually in parallel.

In the present embodiment also, the cooling steam passages are sectioned in parallel along the circumferential direction as mentioned above, hence the pressure loss is dispersed and suppressed, like the example, and heat recovery is carried out likewise at a steam turbine and the like which are not shown.

The present invention has been described with respect to the example and embodiment shown in the figures, but the present invention is not limited thereto but, needless to mention, may be added with various modifications in the concrete structure within the scope of claims as hereinbelow set forth.

According to the present invention, following effect can be obtained. That is, the cooling steam flows separately in the mutually independent and parallel passages, hence comparing with such case that all the cooling steam-flows in series through common pressure loss causing portions so that the pressure loss is accumulated to become larger, there occurs no such case in the present invention and an effective apparatus having a suppressed pressure loss and thus having no. unnecessary troubles in the downstream equipment can be obtained.

Further, by employing such a structure that the blade groups in same one stage of stationary blades or moving blades are cooled in parallel with heat recovery being carried out as well, an effective apparatus having a suppressed pressure loss can be obtained.

## Claims

1. A combined cycle power generation plant, comprising:
a steam turbine;
a gas turbine having a stage with plural blades sectioned into groups of blades;
a cooling system to use steam to cool said groups of blades, wherein said cooling system includes plural mutually independent and parallel cooling steam passages (11-16) to convey the steam to cool said groups of blades of said stage, respectively, wherein the steam is sequentially conveyed through the blades of each respective group of blades; and
a recovery system to recover the steam after said groups of blades of said stage have been cooled thereby, and then to feed the recovered steam to said steam turbine.

2. The combined cycle power generation plant according to claim 1, wherein said cooling steam passages (11-16) are circumferentially arranged.

3. The combined cycle power generation plant according to claim 1 or 2, wherein said groups of blades comprise rotary blades or stationary blades.

4. The combined cycle power generation plant according to claim 1, 2 or 3, further comprising supply channels (lla-16a) in fluid communication with said cooling steam passages (11-16), respectively.

5. The combined cycle power generation plant according to claim 1, 2, 3 or 4, wherein said recovery system includes recovery passages (11b-16b) in fluid communication with said cooling steam passages (11-16), respectively.

## Patentansprüche

1. Energiegewinnungsanlage mit kombiniertem Zyklus, umfassend:
eine Dampfturbine,
eine Gasturbine mit einer Stufe mit mehreren Schaufeln, die in Schaufelgruppen unterteilt sind,
einem Kühlsystem zur Verwendung von Dampf zum Kühlen der Schaufelgruppen, wobei das Kühlsystem mehrere, untereinander unabhängige und parallele Kühldampfdurchgänge (11-16) aufweist, um den Dampf zum Kühlen der jeweiligen Schaufelgruppen der Stufe zu transportieren, wobei der Dampf nacheinander durch die Schaufeln jeder betreffenden Schaufelgruppe transportiert wird, und
ein Rückgewinnungssystem, um den Dampf zurückzugewinnen, nachdem die Schaufelgruppen der Stufe durch diesen gekühlt worden sind, und um dann den zurückgewonnenen Dampf der Dampfturbine zuzuführen.

2. Energiegewinnungsanlage mit kombiniertem Zyklus nach Anspruch 1, wobei die Kühldampfdurchgänge (11-16) umfangsmäßig angeordnet sind.

3. Energiegewinnungsanlage mit kombiniertem Zyklus nach Anspruch 1 oder 2, wobei die Schaufelgruppen Laufschaufeln oder stationäre Schaufeln umfassen.

4. Energiegewinnungsanlage mit kombiniertem Zyklus nach Anspruch 1, 2 oder 3, ferner mit Zuführkanälen (11a-16a) in Fluidverbindung mit den jeweiligen Kühldampfdurchgängen (11-16).

5. Energiegewinnungsanlage mit kombiniertem Zyklus nach Anspruch 1, 2, 3 oder 4, wobei das Rückgewinnungssystem Rückgewinnungsdurchgänge (11b-16b) in Fluidverbindung mit den jeweiligen Kühldampfdurchgängen (11-16) aufweist.

## Revendications

1. Centrale électrique à cycle combiné, comprenant :
une turbine à vapeur ;
une turbine à gaz ayant un étage à plusieurs aubes subdivisées en groupes d'aubes ;
un système de refroidissement qui utilise de la vapeur pour refroidir les groupes d'aubes, le système de refroidissement comprenant plusieurs passages (11 à 16) de vapeur de refroidissement mutuellement indépendants et parallèles pour envoyer la vapeur pour refroidir les groupes d'aubes de l'étage, respectivement, la vapeur étant envoyée séquentiellement dans les aubes de chaque groupe respectif d'aubes ; et
un système de récupération pour récupérer la vapeur après que les groupes d'aubes de l'étage ont été refroidis par elle, puis pour envoyer la vapeur récupérée à la turbine à vapeur.

2. Centrale électrique à cycle combiné suivant la revendication 1, dans laquelle les passages (11 à 16) de vapeur de refroidissement sont disposés circonférentiellement.

3. Centrale électrique à cycle combiné suivant la revendication 1 ou 2, dans laquelle les groupes d'aubes comprennent des aubes mobiles ou des aubes directrices.

4. Centrale électrique à cycle combiné suivant la revendication 1, 2 ou 3, comprenant, en outre des conduits (11a à 16a) d'alimentation en communication de fluide avec les passages (11 à 16) de vapeur de refroidissement, respectivement.

5. Centrale électrique à cycle combiné suivant la revendication 1, 2, 3 ou 4, dans laquelle le système de récupération comprend des passages (11a à 16b) de récupération en communication de fluide avec les passages (11 à 16) de vapeur de refroidissement, respectivement.
